# EUROPEAN PATENT APPLICATION

(11) **EP 1 689 126 A1**
(43) Date of publication of application: **09.08.2006**
(21) Application number: 05290279.8
(22) Date of filing: 08.02.2005
(51) Int. Cl.: H04L 12/28

(54) **Location service for use in a Wireless LAN**

(71) Applicant: ALCATEL, 75008 Paris (FR)
(72) Inventor: Gass, Raymond, 67150 Bolsenheim (FR)
(74) Representative: LOUIS, PÖHLAU, LOHRENTZ

(57) **Abstract**

The invention concerns a method of providing a geographical localisation service within a wireless local area network (2) having two or more wireless network access points (21, 22, 23). The terminal (10) of a user (1) is located at a location (101) of a plurality of locations (100). The terminal (10) measures at least two times the strength of signals (31, 32, 33) received from two or more wireless network access points (21, 22, 23). It chooses the strongest signals of the several measurements as valid signal strengths and triggers a localisation server (5) to compare the valid signal strengths to an intensity map stored in a data base (52). The location from the intensity map which best matches the valid signal strengths is provided as location of the terminal (10).

## Description

The invention relates to a method of providing a geographical localisation service as well as to a terminal for executing this method.

The global proliferation of wireless telecommunication devices has promoted the omnipresence of geographical localisation technologies. Working in most locations of the world, satellite navigation systems like GPS or Galileo are used in a multitude of applications (GPS = Global Positioning System). Another widespread localisation technology, cellular networks provide the possibility to locate a subscriber of a mobile terminal, e.g., based on the time difference of a signal arriving at different base stations. While the former technology is practically useless in indoor applications, the poor spatial resolution of the latter prohibits a use in applications that demand high granularity.

In recent years, the RF-based technology of WLAN has gained significance for indoor localisation tasks (RF = radio frequency; WLAN = wireless local area network). A WLAN and its access points are identified by an SSID, also known as network name (SSID = Service Set Identifier). The signal strength of data exchanged between a WLAN access point and a mobile terminal decreases with the distance between transmitter and receiver and is even more attenuated by obstacles like walls or doors. In addition, the signal is affected by multipath effects and interference with persons or furniture. The intelligent use of the information contained in the signal strength allows an indoor localisation with an accuracy in the range of few metres.

The publication Xiang, Z., et al., "A wireless LAN-based indoor positioning technology", IBM J. Res. & Dev. Vol. 48, No. 5/6, p. 617-626, Sept./Nov. 2004, describes how in a first step, the training phase, the strength of WLAN signals received from each of five WLAN access points is measured at a plurality of locations -nearly 100 positions - on a floor. For each position, 300 scanning operations are performed for each orientation. To reduce the training workload, a model-based signal propagation training scheme is used which reduces the dependence on empirical data. The collected measurements are used to create an intensity map of the floor. In a second step, the working phase, the signals received at a random position are compared to the previously taken values. Based on a probabilistic approach, the signal characteristics are used to find the closest match.

In a similar test, Bahl, P., and Padmanabhan, V. N., "RADAR: An In-Building RF-based User Location and Tracking System", IEEE Infocom 2000, Vol. 2, p. 775-784, March 2004, also proved the reliability of WLAN-based systems for localisation purposes. Mostly, they used the mean, the standard deviation and the median of the collected signal strengths to determine closest matches between the measurements of the training phase and the working phase.

As many WLAN localisation techniques are based on probabilistic models, they require a great number of signal strength measurements in the training phase in order to achieve sufficient accuracy. The great amount of data that has to be processed affords rather complex algorithms and ample storage capacity. Thus, the implementation of the measurement inside a low cost terminal or low cost CPU is difficult. Current WLAN rely on measurements concerning WLAN access points with high signal to noise ratio. Some sophisticated work applies a theoretical study of the signal propagation to avoid the need for establishing a map of the signal intensity. As this may be of particular interest for open space areas, it is rather quickly limited with walls and furniture.

It is the object of the present invention to improve the provision of geographical localisation services.

The object of the present invention is achieved by a method of providing a geographical localisation service within a wireless local area network having two or more wireless network access points, the method comprising the steps of storing an intensity map indicating the strength of signals of two or more wireless network access points at a plurality of locations in a data base, measuring two or more times the strength of signals of two or more wireless network access points by a terminal at a location, choosing the strongest signals of the two or more signal measurements as valid signal strengths of two or more wireless network access points, accessing the data base for determining the location from the intensity map that best matches the valid signal strengths of two or more wireless network access points and providing the best matching location from the intensity map as location of the terminal.

The object of the present invention is further achieved by a terminal for a wireless local area network having two or more wireless network access points, the terminal adapted for measuring two or more times the strength of signals of two or more wireless network access points at a location, choosing the strongest signals of the two or more signal measurements as valid signal strengths, transmitting the valid signal strengths of two or more network access points to a localisation server comprising a localisation unit and a data base storing an intensity map indicating the strength of signals of two or more wireless network access points at a plurality of locations, the localisation unit adapted for accessing the data base for determining the location from the intensity map that best matches the valid signal strengths of two or more network access points and providing the best matching location from the intensity map as location of the terminal.

The current invention provides the advantage that it is possible to achieve satisfactory results with few measurements which significantly shortens the time needed for localisation. From the set of measurements, the greatest value is kept simply because the terminal will receive lower values when bad measurement conditions are met, but higher values are rather rare. Thus, the highest value is a very good guess which comes very close to the "true" value.

As only a very limited set of values has to be handled by the terminal, the measurement can be executed on low cost terminals or processed by low cost CPUs. The wireless hardware and/or firmware inside the terminal is used as measurement unit to determine the strength of the received signals. This is closely linked to the fact that small, low cost mobile terminals which are completely dependant on a battery or an accumulator possess only a scarce and continuously decreasing energy supply. The weak power supply forbids the measurement of the WLAN signal at the access points because the strength of the signals received from the terminal would decrease with time. Therefore, no reliable measurement values could be expected. The current invention avoids this risk by measuring the signals from the WLAN access points at the terminal.

Further advantages are achieved by the embodiments of the invention indicated by the dependent claims.

According to a preferred embodiment of the invention, the terminal includes all access points signalling an SSID. The SSID serves to identify each available WLAN access point. The fact that all available WLAN access points are considered for the measurements, even those that are not part of the currently used WLAN, advances the fast convergence of the localisation process. The measurement operation is adjusted to accept even signals from WLAN access points which are not suited to process any voice or data communications.

It is possible that before choosing the strongest signals from the set of measurements, the measurment signals have to be filtered. Since measurements are not accurate it is often sensible to filter values below a specified threshold and to exclude some specific values that look artificial, e.g., like a signature of the interface, before reaching a correct measured value. This may be achieved by excluding all signals that lie below a specified threshold and/or all signals that lie above another specified threshold.

According to a preferred embodiment of the invention, several consecutive measurements are performed to bypass accuracy problems. A typical number of measurements for achieving good results is ten measurements. But it is also possible that the number of measurements is left as a parameter depending on the geographical conditions. For example, in a difficult, densely furnished environment with many people it may be necessary to take well above ten measurements while in another simple building architecture like a big hall even less than ten measurements may suffice to reach a well-converging result.

According to a preferred embodiment of the invention, ten or more signal measurements are taken. Furthermore, in a preferred embodiment of the invention it is possible that only ten to fifteen signal measurements or ten to fifty signal measurements are sufficient to provide accurate and reliable results for localisation. This may be a good compromise in that it both provides reliable results and reduces the time needed for localisation.

It is further possible that the valid signal strength chosen by the terminal is transmitted together with corresponding temporal information to the location server where both information sets, the valid signal strength and the temporal information is stored in the data base such that it is also available for reference with respect to further measurements in the future. The temporal information may comprise information on the date, the day of the week, e.g., working day or weekend, school holidays, hour of day, etc.

It is also possible that even further information associated with the measurement is recorded in the data base, e.g., weather information, information on the present personnel, information on projects, events, happenings, etc. The processing unit of the localisation server may be adapted with the aid of appropriate software applications to recognise behaviour patterns of a user carrying a terminal, dependant on the additional information. For example, a user may attend other rooms at the beginning of the week than during the week. This may assist a preferable guess in cases where a decision has to be made among two locations with similar signal values from the intensity map, or it may shorten the time needed for the finding of the best matching location since more probable locations are searched first.

It may be useful for a localisation task to know where a user carrying the terminal has been before the current location. One or more probable paths between a known location where a precedent measurement was made and an unknown location where the current measurement is made may be assumed. It is also known that the orientation of the terminal can affect the strength of a received signal. A user carrying the terminal may block, e.g., with his head or his body, the line-of-sight to an access point, or a different position of the antenna of the terminal may change the signal strength. The input of the orientation of the terminal during the measurement only makes sense if the intensity map stored in a data base also contains information about the influence of the orientation. The knowledge of the path to reach a current location and/or the current terminal orientation may assist in finding the best matching location. The determination of the current location may be forwarded as the number of possible locations from the intensity map is limited. Thus, not the entire data base has to looked through, and in ambiguous cases the decision is facilitated.

According to a further embodiment of the invention, two or more intensity maps are created at different times and stored in the data base. For example, the intensity map may look different in the morning hours when many people are in the building and in the afternoon when no public is admitted. In order to avoid too many ambiguous cases, it may be helpful to create an intensity map of the morning and an intensity map of the afternoon and to store both of them in the data base. When a location is to be determined, the data base corresponding to the time of the measurement is accessed. This approach can be extended to create, store and access intensity maps depending also on other parameters than time.

These as well as further features and advantages of the invention will be better appreciated by reading the following detailed description of presently preferred exemplary embodiments taken in conjunction with accompanying drawings of which:
- Fig. 1: is a diagram of a schematic floor plan where a geographical localisation service is provided.
- Fig. 2: is a block diagram of a system for providing a geographical localisation service according to a first embodiment of the invention.

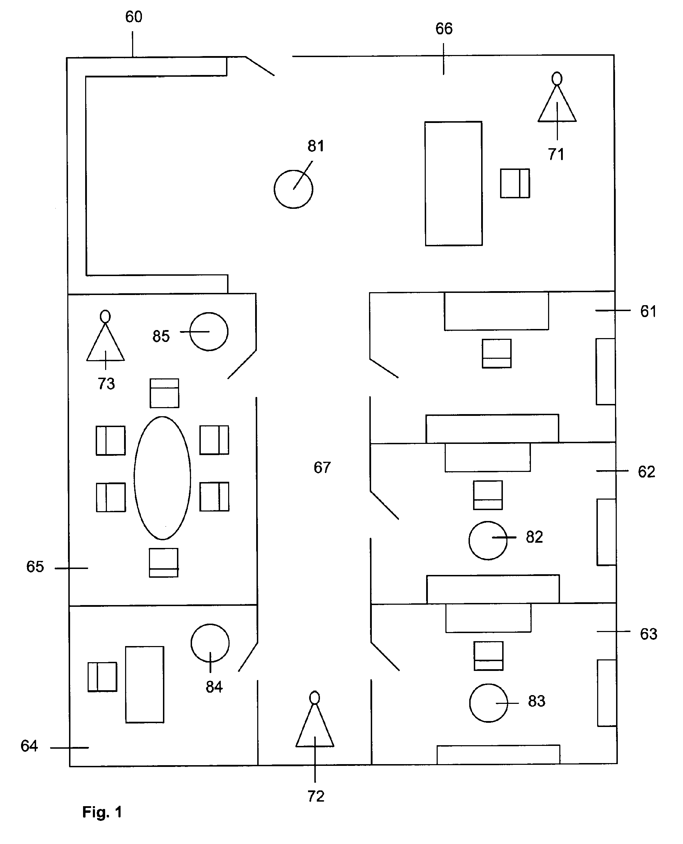

Fig. 1 is a schematic floor plan diagram where a geographical localisation service is provided. The floor 60 consists of four office rooms 61, 62, 63, 64, a meeting room 65, a reception area 66 and a corridor 67 leading from the reception area 66 to the office rooms 61, 62, 63, 64 and the meeting room 65. The offices 61, 62, 63, 64, the meeting room 65 and the reception area 66 comprise usual office furniture like chairs, desks and racks. A WLAN is installed on the floor 60, comprising three WLAN access points 71, 72, 73 which can be accessed from mobile terminals.

When a user of a WLAN-enabled mobile terminal is located in proximity to the WLAN access points 71, 72, 73, the terminal receives presence signals from the WLAN access point 71, 72, 73, the signals comprising an SSID which identifies the network the WLAN is associated to. The WLAN access points 71, 72, 73 can be identified based on the use of the SSID. Then the user can choose which WLAN access point he wants to use to execute his communication via the WLAN. The strength of each signal received from a WLAN access point 71, 72, 73 depends on the air-line distance to the respective WLAN access point 71, 72, 73 and on the attenuation, the interference, echos, and other effects the signal experiences through walls, doors, furniture, people, other electric devices, etc.

The strength of a signal received from a specific WLAN access point 71, 72, 73 will be different at each of the specified locations 81, 82, 83, 84, 85 indicated in the floor plan 60. For example, the terminal will receive at a first location 81 three separate signals with different strength from the three WLAN access point 71, 72, 73. The values corresponding to the signal strength can be arranged in form of a vector, i.e., the signal strength value from the first WLAN access point 71 constitutes the first component of the vector, the signal strength value from the second WLAN access point 72 constitutes the second component of the vector, and the signal strength value from the third WLAN access point 73 constitutes the third component of the vector. Similarly, measurements at the four other locations 82, 83, 84, 85 will give different signal strength values and consequently different vectors. Generally, N signals at a specific location received from N different access points result in an N-dimensional signal strength vector assigned to that location.

Measurements of the signal strength are not limited to the five locations 81, 82, 83, 84, 85 exemplarily specified on the floor 60 but can be performed at every possible position on the floor 60, and even outside of the floor 60. This way, the signal strengths, i.e., the signal intensities can be sampled for a multitude of locations, either according to a pre-defined grid of positions and/or for arbitrarily chosen locations, for example for one hundred different locations on the floor 60. All the determined signal strength vectors are stored as reference vectors in a data base and form an intensity map of the floor 60.

For locations where no measurement has been performed, signal strength vectors can be interpolated from neighbouring locations where measurements have been performed and signal strength vectors exists. Finally, for every location a set of N signal strength values, i.e., an N-dimensional signal strength vector, exists in the intensity map stored in a data base. In our case where three access points 71, 72, 73 are available, a three-dimensional signal strength vector exists for every location as reference vector in the data base.

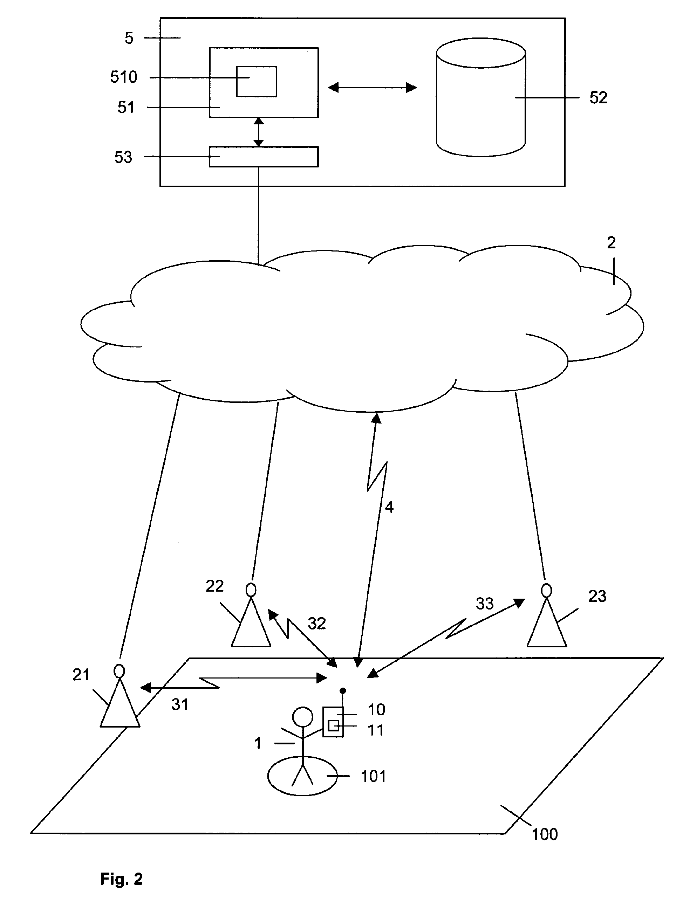

Fig. 2 shows a diagram schematically illustrating a system for providing a geographical localisation service according to a first embodiment of the invention. A user 1 of a wireless communication terminal 10 is located at a specific location 101 of a plurality of locations, represented in Fig. 2 by a rectangular area 100. Three access points 21, 22, 23 of a WLAN 2 are accessible from the plurality of locations 100. The WLAN 2 may be connected to other networks and to the Internet.

The wireless communication terminal 10 can be any electronic device which is adapted for communicating via WLAN access points 21, 22, 23 in a network 2, e.g., a WLAN-enabled mobile phone or a WLAN-enabled PDA (PDA = Personal Digital Assistant). The terminal 10 is composed of an electronic circuit having at least one microprocessor, a measuring unit 11 for measuring the strength of signals received from WLAN access points 21, 22, 23, application programs executed by the at least one microprocessor, and input and output means, for example a microphone, a loudspeaker, a keypad and a display. The functionalities of the terminal 10 are performed by the interaction of these hardware and software components.

The terminal 10 receives signals 31, 32, 33 from the WLAN access points 21, 22, 23 and triggers ten consecutive measurements of the intensity, i.e., of the strength of the received signals 31, 32, 33 whereby the measurements are performed by the measuring unit 11. The signals 31, 32, 33 received from the WLAN access points 21, 22, 23 comprise the SSID of the access points 21, 22, 23 which can be identified based on the use of the SSID. It is possible that the measuring unit 11 has stored a pre-defined value which determines the number of measurements to be performed. It is also possible that the number of measurements to be performed is chosen depending on the quality of the received signals 31, 32, 33, whereby the quality of the received signals 31, 32, 33 can depend, for example, on the geographical conditions. This decision is made by the measuring unit 11, or it can be made by another unit like, e.g., a localisation server 5. In any case, at least two measurements are performed by the measuring unit 11.

The localisation server 5 comprises a localisation unit 51 with a processing unit 510, a data base 52, and an interface 53. Further, it is composed of one or several interlinked computers, i.e., a hardware platform, a software platform basing on the hardware platform and several application programs executed by the system platform formed by the software and hardware platform. The functionalities of the server 5 are provided by the execution of these application programs. The application programs or a selected part of these application programs constitute a computer software product providing a geographical localisation service as described in the following, when executed on the system platform. Further, such computer software product is constituted by a storage medium storing these application programs or said selected part of application programs.

The terminal 10 is adapted for communicating via a wireless connection 4 with a localisation server 5 which is accessible via the interface 53 from the WLAN 2. It is possible that the terminal 10 transmits a sample of the received signals 31, 32, 33 to the localisation server 5 in order to provide the localisation server 5 with a basis for a decision on how many measurements are to be performed.

When all measurements to be performed have been completed, the measuring unit 11 applies a filter to the ten signal strength values of each access point 21, 22, 23 it has received signals 31, 32, 33 from. Signal strength values that lie below a specific threshold are rejected, as well as signal strength values that lie above a specific threshold. The thresholds may be absolute pre-defined values, or they may depend on the measurements, e.g., on the mean, the median, or the standard deviation of the measurement values. After filtering the values, the terminal 10 chooses - for each access point 21, 22, 23 it has received signals 31, 32, 33 from - the strongest signal strength value of the signal measurements. The strongest signal strength values of each access point 21, 22, 23 are arranged to form the valid signal strength vector, i.e., in this embodiment of the invention a three-dimensional vector. The terminal 10 transmits the valid signal strength vector via the connection 4 to the localisation server 5.

The localisation server 5 receives the valid signal strength vector via the interface 53 and routes it to the localisation unit 51. The localisation unit 51 controls and manages the data flow concerning the provision of the geographical localisation service. The localisation unit 51 triggers the processing unit 510 to access the data base 52 storing an intensity map indicating the strength of signals from the three wireless network access points 21, 22, 23 at a plurality of locations. The creation of the intensity map has been described with reference to Fig. 1.

The processing unit 510 accesses the data base 52 to determine the location from the intensity map that best matches the valid signal strength. The task of the processing unit 510 is to compare the vector of the valid signal strength values with the vectors of the signal strength values contained by the intensity map, i.e., the reference vectors. The best matching vector of the reference vectors is the vector of the data base with the shortest euclidian distance to the valid signal strength vector. For the calculation of the distance, the processing unit 510 may take a limited error range into account.

It is not necessary that the valid signal strength vector determined by the terminal 10 has the same number of components as the reference vectors stored as intensity map in the data base 52. It is possible to assign each valid signal strength value to a specific access point 21, 22, 23 based on the use of the SSID. For example, the intensity map has been created and stored in the data base 52 with signals from three access points 21, 22, 23 such that the reference vectors comprise three components, let us call them x, y, and z components. In the meanwhile, one access point 23, corresponding to the z-component of the vectors, has broken down. The measurement performed by the terminal 10 results in signal strength values only from the two remaining access points 21, 22, resulting in a valid signal strength valid of two components, the x and the y component. Then the euclidian distance of the reference vectors to the valid signal strength vector is calculated by using only the x and y components of the reference vectors. Thus, the N-dimensional reference vectors are projected onto the (N-1)-dimensional plane of the measured valid signal strength vector.

It is possible that the processing unit 510 makes use of search algorithms which take into account additional information like, e.g., the identity of the user of the terminal, the date and time of the measurement, etc. It is also possible that the processing unit 510 accesses different intensity maps dependent on, e.g., the time of the measurement. However, the additional information about the measurement and the choice among several intensity maps is supposed to shorten the time needed to find the best matching vector from the intensity map, or to provide a basis for a decision in ambiguous cases where, for example, two vectors are - within the error range - similarly close to the valid signal strength vector.

The location from the intensity map which is associated with the best matching vector of the signal strength values is provided as the location of the terminal 10. The determined geographical location of the terminal 10 is transmitted to the terminal 10 where it can be indicated to the user 1.

## Claims

1. A method of providing a geographical localisation service within a wireless local area network (2) having two or more wireless network access points (21, 22, 23), the method comprising the steps of:
storing an intensity map indicating the strength of signals (31, 32, 33) of two or more wireless network access points (21, 22, 23) at a plurality of locations (100) in a data base (52);
measuring two or more times the strength of signals (31, 32, 33) of two or more wireless network access points (21, 22, 23) by a terminal (10) at a location (101);
choosing the strongest signals of the two or more signal measurements as valid signal strengths of two or more wireless network access points (21, 22, 23);
accessing the data base (52) for determining the location from the intensity map that best matches the valid signal strengths of two or more wireless network access points (21, 22, 23); and
providing the best matching location from the intensity map as location of the terminal (10).

2. The method of claim 1,
**characterised in**
**that** signals (31, 32, 33) from all wireless network access points (21, 22, 23) where a service set identifier can be received from are taken into account for the signal measurements.

3. The method of claim 2,
**characterised in**
**that** also signals (31, 32, 33) from access points (21, 22, 23) which do not provide data or voice communication services and/or which belong to other wireless local area networks (2) are taken into account for the signal measurements.

4. The method of claim 1,
**characterised in**
**that** signals below and/or above specified thresholds are ignored.

5. The method of claim 1,
**characterised in**
**that** the number of signal measurements depends on the geographical conditions.

6. The method of claim 1,
**characterised in**
**that** the number of signal measurements is ten or more, in particular between ten and fifteen.

7. The method of claims 1,
**characterised in**
**that** the orientation of the terminal (10) and/or locations of the terminal (10) at preceding measurements are taken into account to find the best matching location.

8. The method of claim 1,
**characterised in**
**that** two or more intensity maps created at different times are stored in the data base (52) and an appropriate intensity map depending on the time of the signal measurements is accessed.

9. A terminal (10) for a wireless local area network (2) having two or more wireless network access points (21, 22, 23), the terminal (10) adapted for measuring two or more times the strength of signals (31, 32, 33) of two or more wireless network access points (21, 22, 23) at a location (101), choosing the strongest signals of the two or more signal measurements as valid signal strengths, transmitting the valid signal strengths of two or more wireless network access points (21, 22, 23) to a localisation server (5) comprising a localisation unit (51) and a data base (52) storing an intensity map indicating the strength of signals (31, 32, 33) of two or more wireless network access points (21, 22, 23) at a plurality of locations (100), the localisation unit (51) adapted for accessing the data base (52) for determining the location from the intensity map that best matches the valid signal strengths of two or more network access points (21, 22, 23) and providing the best matching location from the intensity map as location of the terminal (10).

10. The terminal of claim 9,
**characterised in**
**that** the terminal (10) is adapted for transmiting the valid signal strengths together with associated timestamps and/or other information associated with the signal measurement to the localisation server, whereby the localisation server (5) is adapted for storing the valid signal strengths together with associated timestamps and/or other information associated with the signal measurement in the data base (52).
